# EUROPEAN PATENT APPLICATION

(11) **EP 1 693 347 A1**
(43) Date of publication of application: **23.08.2006**
(21) Application number: 04818501.1
(22) Date of filing: 12.11.2004
(51) Int. Cl.: C03B 9/38, C03B 9/48

(54) **METHOD OF REGULATING TEMPERATURE OF BOTTLE-FORMING MOLD AND BOTTLE-FORMING MOLD USED FOR THE METHOD**

(30) Priority: 14.11.2003 JP 2003385486
(71) Applicant: Nihon Yamamura Glass Co. Ltd., Nishinomiya-shi, Hyogo 662-8586 (JP)
(72) Inventor: MIYAGI, Atsushi, Hamamatsubara-cho Hyogo 662-8568 (JP); UEDA, Mitsuo, Hamamatsubara-cho Hyogo 662-8568 (JP); HASHIMOTO, Katsumi, Hamamatsubara-cho Hyogo 662-8568 (JP); ONO, Shintaro, Hamamatsubara -cho Hyogo 662-8568 (JP)
(74) Representative: Haley, Stephen
(86) International application number: PCT/JP2004/016819
(87) International publication number: WO 2005/047197

(57) **Abstract**

In order to allow vertical ventilation in a plurality of circumferential locations around the contour surface (1a, 2a, 3a) of a mold in the process of molding and regulate the temperature, the ventilation is carried out using an abutting path (1d, 2d, 3d) formed between the abutting surfaces (1b1, 1c1) (2b1, 2c1) (3b1, 3c1) of inner and outer members (1b, 1c) (2b, 2c) (3b, 3c) forming the contour surface part and its outer peripheral part of the mold (1, 2, 3), thereby achieving cooling. In this way, various shapes based on the axially changing shape of the contour surface are obtained readily and inexpensively, and temperature control suitable for the axially changing shape of the contour surface is carried out with high cooling effect.

## Description

### TECHNICAL FIELD

The present invention mainly relates to a method for regulating the temperature of a bottle mold by cooling a bottle mold such as a blank mold and a blow mold for use in a bottle making machine in the process of molding, and a bottle mold used therefor. The invention more particularly relates to a method for cooling a bottle mold that allows vertical ventilation to be carried out in a plurality of circumferential locations and a bottle mold used therefor.

### BACKGROUND ART

Regarding a bottle making machine, shape ensuring has been practiced since old times. According to the technique, a blank mold or a blow mold in the process of molding is ventilated through a cooling path formed therethrough by drilling from the outside, so that the temperature of parison or a bottle to be sequentially formed from a soften high temperature gob is lowered depending on the steps of molding. Such a cooling method is generally carried out by ventilation through a plurality of cooling paths provided parallel to the axial line around a contour surface in a blank mold or a blow mold (see for example Japanese Patent Publications Nos. 03-228833, 06-064931 and 61-083637).

Japanese Patent Publication No. 03-228833 discloses in particular a technique to address the adverse effect of temperature difference in the circumferential direction caused by difference in heat radiation to the outside attributable to paired arrangement of adjacent blank molds. According to the disclosed technique, the quantity of air sent from a plenum chamber to a blank mold can be controlled individually for each of air blowing regions provided in the circumferential direction.

Japanese Patent Publication No. 06-064931 discloses in particular a technique to address the disadvantage that an air blower tends to have a complicated structure and suffers from high back pressure as its positioning is hindered by adjacent arrangement of a blank mold and a blow mold and their surrounding equipment. According to the disclosed technique, a semi-circular inlet is provided in communication with a circumferential cooling path at the outer circumference of a blank mold and a blow mold in their intermediate level, so that the air blower can send air into the cooling path through the inlet via a support member that supports the blank mold and the blow mold so that they can be opened and closed. In this way, air to the cooling path can be branched midway to the upper and lower sides, and therefore the temperature difference of cooling air between the upstream and downstream sides as in the case of ventilation from one end of a long cooling path to the other end can be reduced.

In the disclosure of Japanese Patent Publication No. 61-083637, the diameter of the cooling path is different between the upstream side and the downstream side. In this way, ventilation conditions such as a flow rate can be made different depending on the different diameters, so that the cooling conditions can be controlled in the axial direction of the mold.

A known mold for glass with good mold releasability that can be used without oil swabbing is made of a Ni-based alloy and has a rough surface as a contour surface (see for example Japanese Patent Publication No. 08-109446). However, the Ni-based alloy has low thermal conductivity and is not suitable for cooling the contour surface. There is a known mold for a container such as a glass vase or the like having a surface part for use in contact with a workpiece and a heat radiating part provided inside or outside the surface part for use and in contact with a cooling medium. The surface part for use is made of an alloy that has heat resistance, abrasion resistance, and appropriate wettability to the workpiece, while the heat radiating part is made of a metal or an alloy having better thermal conductivity than that of the surface part for use (see for example Japanese Patent Publication No. 05-155633) .

In recent years, there have been demands for energy saving, labor saving, and improved productivity, and therefore there has been a need for improvement in the yield of manufactured bottles. Meanwhile, the safety standard for bottles has become higher, and extremely thin, ultra light-weight bottles have been developed. In other words, the precision standards have been raised, and it has been more difficult to produce bottles with a high yield.

The inventors have witnessed failures in various bottles such as an inclined finish, deformed body caused by an inclined neck, a deformed body, a thickness failure, and check or surface roughness at a narrowed or recessed part. The check forms either by excessive or insufficient cooling. Form failures are particularly often observed in molding ultra light-weight bottles and the degree of failure in the case is large. It was assumed that the inclined finish or settling was probably simply because of insufficient cooling, and various experiments were conducted in which a cooling ring was provided around the shoulder part or neck part, or the quantity of air to these parts was increased, so that enhanced cooling could be carried out.

When the cooling was thus enhanced to such a level that the problem of the inclined finish or deformed body could be solved, the cooling was locally excessive. In some cases, this caused an enhancing film to stick poorly in the surface enhancement treatment called hot end coating after the molding, bottom checks, bottom cracks, distortion or the like were caused.

These failures indicate that local temperature control was not appropriately carried out corresponding to the temperature distribution of the contour surface that varies depending on difference in various conditions such as the shape, the thickness, and the diameter of the bottle, and how long it takes before the contour surface and the material for molding contact that depends on the relation between the contour surface of a blank mold and the shape of gob to be the material for molding, or the relation between the shape of the contour surface of the blow mold and parison to be the material for molding. It was believed that a conventional cooling path that was formed through by drilling from the outside was too simple to address changes in the shape of the contour surface mainly in the axial direction.

Simply by using cooling paths parallel to the axial line, for example, as those disclosed by Japanese Patent Publications Nos. 03-228833, 06-064931, and 61-083637, the problem of the varying temperature distribution in the axial direction of the contour surface cannot be solved even if the cooling condition is controlled in the circumferential direction as disclosed by Japanese Patent Publication No. 03-228833 or the temperature difference of the cooling air between the upstream side and the downstream side is reduced as disclosed by Japanese Patent Publication No. 06-064931. If the cooling condition is changed by making the diameter different between the upstream side and the downstream side as disclosed by Japanese Patent Publication No. 61-083637 in order to address the varying temperature distribution in the axial direction of the contour surface, the cooling effect is more indirect in the part further from the contour surface and the cooling is not carried out according to the set condition. It is not possible in particular to cool locally intensively in order to prevent the finish inclination or deformed body, It would be still more difficult to cool the locally recessed part on the outer surface or the narrowed part along the body.

On the other hand, a plurality of straight holes bored to midway from different locations may be connected to form a bent cooling path in a through state. However, a dozen or so cooling paths are necessary around the contour surface, and when the paths are combined with holes, holes as many as a number produced by multiplying the number of combinations by the number of cooling paths are necessary. This complicates the operation and increases the cost. When two or more holes are connected, the number of bends in the cooling paths in the axial direction of the contour surface can be increased. However, every time one combination is added, holes as many as a multiple of the cooling paths are necessary, and the openings of the holes to the outside of the mold as many as the number of holes minus two should be sealed, which makes the operation even more cumbersome and increases the cost.

The mold disclosed by Japanese Patent Publication No. 08-109446 is disadvantageous in terms of cooling and it is made of an expensive material as a whole. Therefore, the cost would be very high if a large number of cooling paths are formed.

According to the disclosure of Japanese Patent Publication No. 05-155633, no cooling path is required and the thickness of the heat radiation part is changed according to the axially changing shape of the contour surface. This allows the temperature control of the contour surface to be more uniformly carried out. However, while heat is conducted from the surface part for use to the heat radiating part and from the heat radiating part to the atmosphere, cooling is not effective as compared to the case of cooling by ventilation in an integral structure in which elements are positioned closely with each other, and it takes longer to cool. A three-layer structure including a further metal part having higher thermal conductivity may be employed in order to enhance the cooling, but the structure is complicated and expensive. Furthermore, different kinds of metal must be separated when they are discarded, and the cost is in proportion with the number of layers.

It is a main object of the invention to provide a method of regulating the temperature of a bottle mold that provides high cooling effect and the temperature of the mold to be easily controlled, and a bottle mold therefor. A further object of the invention is to improve mold releasability and reduce the disposal cost.

### DISCLOSURE OF THE INVENTION

According to a method for regulating a temperature of a bottle mold according to invention, vertical ventilation is allowed to be carried out in a plurality of circumferential locations around a contour surface of a mold in the process of molding, and the ventilation is carried out for cooling using an abutting path formed by abutting surfaces of inner and outer members forming a contour surface part and an outer peripheral part of the mold, so that the temperature of the mold is regulated. In order to achieve this, a bottle mold according to the invention includes inner and outer members formed by casting, for forming a contour surface part and an outer peripheral part of the mold. The mold includes a cooling path that includes an abutting path formed between abutting surfaces of the inner and outer members by casting, and the cooling path has a vent and an exhaust outlet at an outer peripheral surface of the mold. In this way, the bottle mold is ventilated in the vertical direction for cooling and regulating the temperature using an abutting path formed by the abutting surfaces of the inner and outer members forming the contour surface part and the outer peripheral part of the mold, so that various bent shapes including a straight shape parallel or inclined to the axial line are obtained based on shapes such as a flat shape parallel or inclined to the axial line, a recessed or raised shape, and a combination of the shapes at the abutting surfaces of the inner and outer members in the abutting path according to the axially changing shape of the contour surface. Therefore, the temperature control suitable for the axially changing shape of the contour surface is carried out with high cooling effect. In addition, the abutting path between the abutting surfaces of the inner and outer members has a simple structure defined by open surface shapes, and therefore the path is formed inexpensively. Consequently, the bottle mold is ventilated for cooling and regulating the temperature using the abutting path that can have various shapes between the abutting surfaces of the inner and outer members according to the axially changing shape of the contour surface, so that the temperature control suitable for the axially changing shape of the contour surface is carried out with high cooling effect. The abutting path has a simple structure defined by open surfaces, and therefore the path is formed inexpensively. In a bottle mold in particular, such an abutting path is formed by simple machine working or without machine working at all, and the cost is further reduced. The inner and outer members are exchanged individually when they are at the end of their useful life.

The other objects and features of the present invention will become more apparent from the following detailed description and the accompanying drawings. The features of the invention may be employed singly or in various possible combinations.

### BRIEF DESCRIPTION OF THE DRAWINGS

Fig. 1 illustrates a front view of the seam part of one split half of a blank mold and a cross sectional bottom view thereof according to one example of an embodiment of the invention;
Fig. 2 illustrates a plan view of an outer member in the other split half of the blank mold and a front view of the seam part thereof according to the example of the embodiment of the invention;
Fig. 3 is an exploded perspective view of the inner and outer members in the split half shown in Fig. 2;
Fig. 4 is a front view of a seam part in one split half of a blow mold according to another example of the embodiment of the invention;
Fig. 5 is a front view of a seam part in one split half of a blow mold according to yet another example of the embodiment of the invention;
Fig. 6 is a front view of a seam part in one split half of an example of a combination of a blank mold and a lip mold according to a still further example of the embodiment of the invention;
Fig. 7 is a plan view of the split half shown in Fig. 6;
Fig. 8 is a perspective view showing the relation between the outer member and the lip mold of the split half in Fig. 6; and
Fig. 9 is a graph showing results of experiments in which the temperatures of the base part, waist part, and shoulder part of the contour surface were detected when the inner member was fastened to the outer member by bolts and when it is fixed by suspension.

### BEST MODE FOR CARRYING OUT THE INVENTION

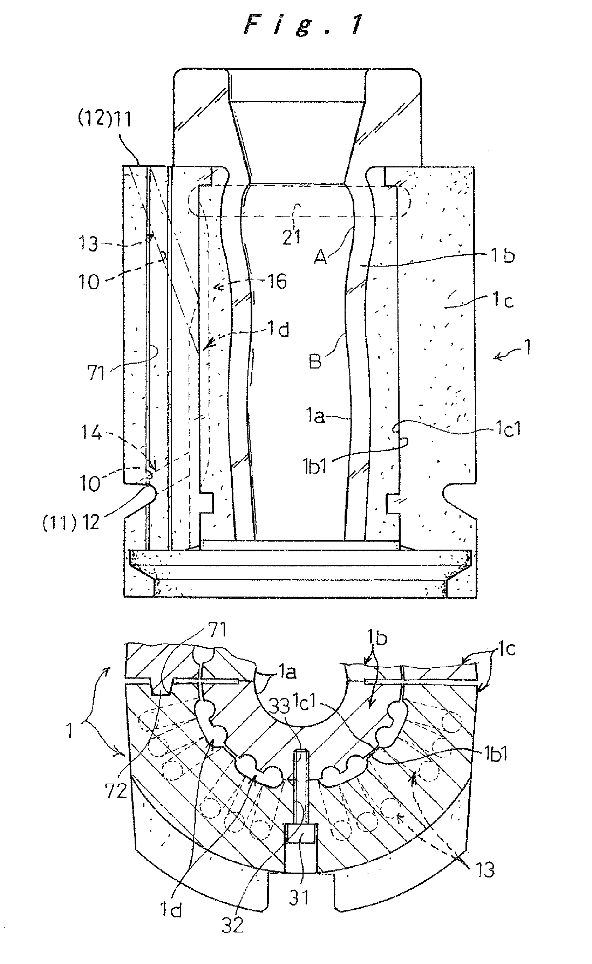

Now, a method of regulating the temperature of a bottle mold according to the invention and a bottle mold used therefor as an embodiment will be hereinafter described in detail with reference to Figs. 1 to 5 in conjunction with several examples for better understanding of the invention. Note that the following description and illustration are by way of example only and are not to be taken as limiting the scope of the claims.

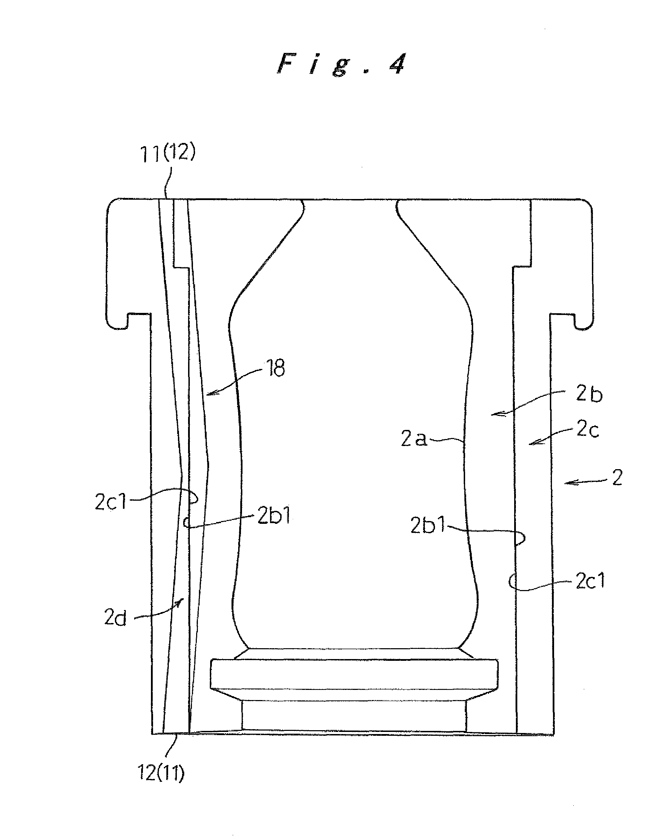

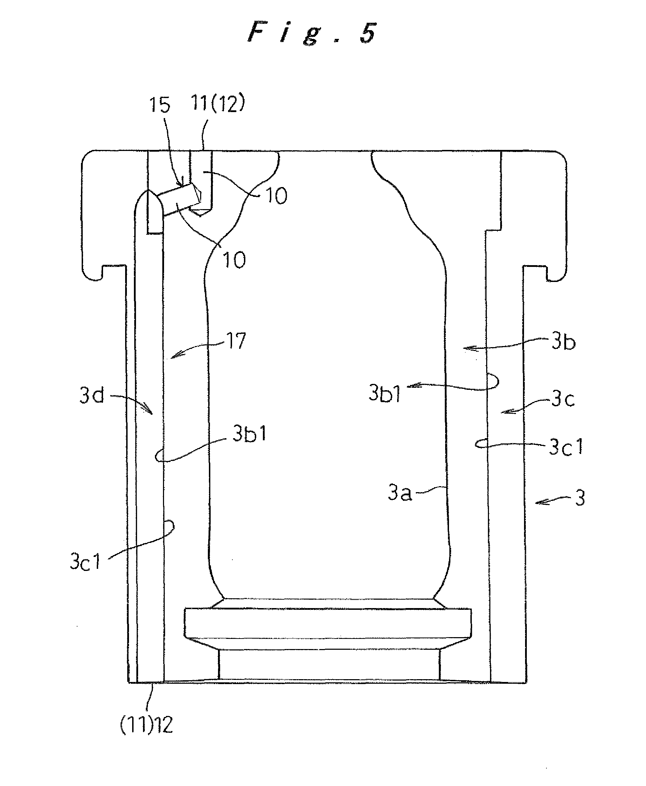

By the method of regulating the temperature of a bottle mold according to the embodiment, regarding an example of a blank mold 1 shown in Figs. 1 to 3, an example of a blow mold 2 in Fig. 4, and an example of a blow mold 3 in Fig. 5 all in the process of molding, ventilation for cooling in the vertical direction is allowed in a plurality of locations in the circumferential direction around their contour surfaces 1a, 2a, and 3a using the abutting paths 1d, 2d, and 3d formed between the abutting surfaces 1b1 and 1c1, between the abutting surfaces 2b1 and 2c1, and between the abutting surfaces 3b1 and 3c1, respectively in inner and outer member sets 1b and 1c, inner and outer member sets 2b and 2c, and inner and outer member sets 3b and 3c, respectively forming the contour surface part and the outer peripheral part of the molds 1 to 3. The temperature of each of the molds is basically regulated in this way.

When the thus formed abutting paths 1d, 2d, and 3d are used to allow ventilation to be carried out in the vertical direction through the molds 1 to 3 for cooling and regulating the temperature, various bent shapes including a straight shape parallel or inclined to the axial line are obtained based on shapes such as a flat shape parallel or inclined to the axial line, a recessed or raised shape formed by a curved surface, and a combination of the shapes at a set of the abutting surfaces 1b1 and 1c1 in the inner and outer members 1b and 1c, a set of the abutting surfaces 2b1 and 2c1 in the inner and outer members 2b and 2c, and a set of abutting surfaces 3b1 and 3c1 in the inner and outer member 3b and 3c formed by the abutting paths 1d, 2d, and 3d according to the axially changing shapes of the contour surfaces 1a, 2a, and 3a. Therefore, the cross sectional area of the paths can be changed in the lengthwise direction in various ways if necessary, so that the temperature control suitable for the axially changing shapes of the contour surfaces 1a, 2a, and 3a is carried out with high cooling effect. In addition, the abutting paths 1d, 2d, and 3d each have a simple structure defined by open surface shapes in the set of the abutting surfaces 1b1 and 1c1 in the inner and outer members 1b and 1c, the set of the abutting surfaces 2b1 and 2c1 in the inner and outer members 2b and 2c, and the set of abutting surfaces 3b1 and 3c1 in the inner and outer members 3b and 3c, and therefore these paths are formed inexpensively.

According to the method, the inner and outer members 1b and 1c, 2b and 2c, and 3b and 3c forming the contour surface part and its outer peripheral part are formed by casting, and are implemented by the molds 1 to 3 shown in Figs. 1 to 5 including the abutting paths 1d, 2d, and 3d defined by the abutting surfaces 1b1 and 1c1, 2b1 and 2c1, and 3b1 and 3c1, respectively formed by casting. Furthermore, the abutting paths 1d, 2d, and 3d are formed by the shapes of the abutting surfaces 1b1 and 1c1, 2b1 and 2c1, and 3b1 and 3c1 provided by casting, so that machine working is not necessary or simplified if necessary, which reduces the cost. In order to achieve this, at least one of the pair of surfaces has a grooved part or recessed part as in a large part of the abutting surface 3c1 of the outer member 3c in Fig. 5. As shown in the examples in Figs. 1 to 3, using grooved parts on both sides, the shapes of the abutting paths 1d, 2d, and 3d can be selected depending on the shapes of the grooves. The inner and outer members can be exchanged individually when they are at the end of their useful life.

As illustrated by the blank mold 1 in Figs. 1 to 3, the inner and outer members 1b and 1c are formed by casting, and their surfaces have a cast surface having a satin like pattern thereon as shown in the figure. The contour surface 1a of the inner member 1b is however finished with high shape precision and size precision by machine working Abutment surfaces, fitting surfaces, and engagement surfaces for positioning or supporting among each other and abutment surfaces, fitting surfaces, and engagement surfaces with an opening/closing support mechanism for the blank mold 1, a baffle, and a lip mold are finished as shown by imaginable bright lines and provided with necessary shape precision and size precision by machine working. The casting method is preferably die casting, more preferably precision casting in order to reduce the number of locations to be subjected to machine working or the degree of working.

Note that as shown in Fig. 1, a positioning portion having a groove 71 and a ridge 72 fitted with each other is provided on one of the right and left of the seams of the outer members 1c, and the portion may be provided to both members though the portion is not provided at the inner member 1b. The positioning portion provided on one of the right and left parts of the outer member 1c and/or the inner member 1b is arbitrarily selectively set on the opening/closing center side where the mold 1 is opened/closed by an arm or on the opposite side to the opening/closing center side.

As with the abutting path 2d in the blow mold 2 in the example shown in Fig. 4, the path independently has a vent 11 and an exhaust outlet 12 at its outer surface of the blow mold 2 or the like, so that vertical ventilation is carried out. Furthermore, as described above, the abutting path 2d may have various bent shapes including a straight shape parallel or inclined to the axial line, two-, three-, or four-dimensional bent shapes based on shapes such as a flat shape parallel or inclined to the axial line, a recessed or raised shape formed by a curved surface, and a combination of the shapes at the set of the abutting surfaces 2b1 and 2c1 in the inner and outer members 2b and 2c according to the axially changing shape of the contour surface 2a. It is understood that the cross sectional area of the path is changed in the lengthwise direction in various ways if necessary, and in the shown example, there is a cooling path 18 having a "<" shaped bent part in one location in the center that almost conforms to the axially changing shape of the contour surface 2a.

Meanwhile, in the abutting paths 1d, 2d, and 3d of the molds 1, 2, and 3, the ventilation and cooling may be carried out using the connection between the abutting paths 1d, 2d, and 3d, a through path having one or more straight path section 10 formed in the inner members 1b, 2b, and 3b or/and the outer members 1c, 2c, and 3c, more specifically upper and lower through paths 13 and 14 formed of the one straight path section 10 provided in the outer member 1c in the blank mold 1 in Figs. 1 to 3, and a through path 15 formed of two straight path sections 10 provided in the inner member 3b in the blow mold 3 in Fig. 5, so that the temperature of the molds 1 to 3 may be regulated.

In this way, in addition to the shapes of paths defined by the abutting paths 1d, 2d, and 3d, the shapes of paths according to the number of the straight path sections 10 may be obtained in the region in the inner members 1b, 2b, and 3b or/and the outer members 1c, 2c, and 3c outside the range between the abutting surfaces 1b1 and 1c1, the abutting surfaces 2b1 and 2c1 and the abutting surfaces 3b1 and 3c1 of the molds 1 to 3. In this way, the temperature control is carried out suitably for the axially changing shapes of the contour surfaces 1a, 2a, and 3a with high cooling effect beyond the limit of the regions of the abutting surfaces 1b1 and 1c1, 2b1 and 2c1, and 3b1 and 3c1. Furthermore, the through paths 13, 14, and 15 have a simplified structure using the inner and outer open surfaces because the inner members 1b, 2b, and 3b or/and the outer members 1c, 2c, and 3c are discretely formed bodies, and therefore they are implemented inexpensively.

According to the method, the inner and outer members 1b and 1c, and the inner and outer members 3b and 3c forming the contour surface part and the outer peripheral part are formed by casting. In addition to the abutting paths 1d and 3d defined by the abutting surfaces 1b1 and 1c1, and 3b1 and 3c1 respectively by casting, there are cooling paths 16 and 17 including through paths 13, 14, and 15 having one or more straight path section 10 formed in inner members 1b and 3b or/and the outer members 1c and 3c in communication with the abutting paths. The cooling paths 16 and 17 are implemented by the blank mold 1 shown in Figs. 1 to 3 and the blow mold 3 shown in Fig. 5 having a vent 11 and an exhaust outlet 12 around the inner members 1b and 2b or/and at the outer peripheral surfaces of the outer members 1c and 2c. Note that when the through paths 13 to 15 have two or more straight path sections 10 as in the case of the through path 15 and paths almost conforming to the axial non-straight shapes of the contour surfaces 1a and 3a, the paths may have path shapes with bent locations as many as the number of the straight path sections 10 that is two or more and may conform to various kinds of contour surfaces, so that the temperature is controlled by cooling suitable for the axially changing shapes of the contour surfaces 1a and 3a. Furthermore, as for the through paths 13, 14, and 15, two straight path sections 10 may readily be formed from the side of the opening surface of the inner member 3c as drill holes and they do not have to be sealed as shown by the example of the through path 15 in Fig. 5. Therefore, the structure is simplified and implemented inexpensively.

Thermal insulation is carried out using a hollow part 21 formed as in the example shown in Fig. 1 between the abutting surfaces 1b1 and 1c1, between the abutting surfaces 2b1 and 2c1, and between the abutting surfaces 3b1 and 3c1 in the molds 1 to 3, and in combination with the cooling described above, the temperature of the molds 1 to 3 is regulated. In this way, the temperature ensuring is allowed by the cooling by ventilation through the paths in the various forms as well as the thermal insulation by the air in the hollow part 21 formed by the abutting surfaces 1b1 and 1c1, the abutting surfaces 2b1 and 2c1, and the abutting surfaces 3b1 and 3c1. In this way, the temperature regulation is carried out around the contour surfaces 1a, 2a, and 3a more appropriately without complicating the structure or increasing the cost.

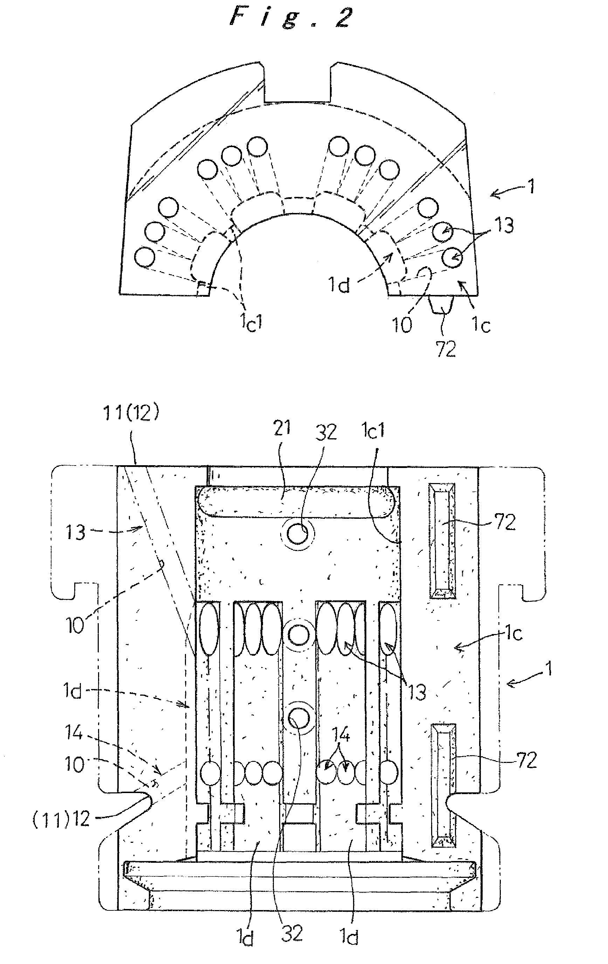

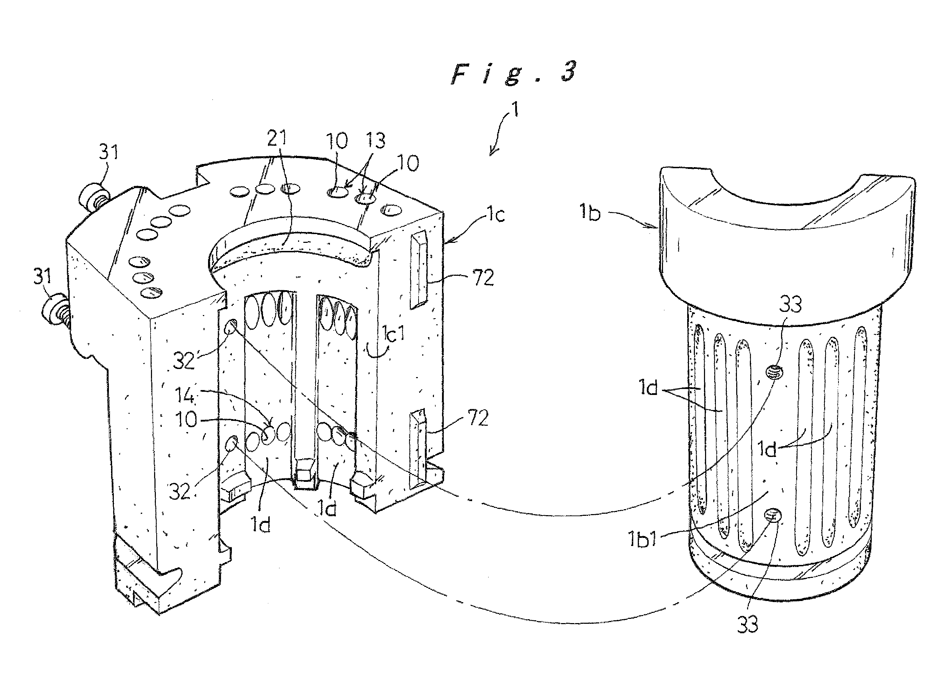

This method is implemented, for example, by the structure of the blank mold 1 having the hollow part 21 between the abutting surfaces 1b1 and 1c1 formed by casting as in the example shown in Figs. 1 to 3. Similarly to the abutting paths 1d, 2d, and 3d, the hollow part 21 are obtained by simple machine working or without machine working at all, and therefore does not give rise to cost increase. The hollow part 21 is formed by a recess formed at least in one abutting surface such as the abutting surface 1c1 in the example shown in Figs. 2 and 3. Using recesses in both parts, the hollow part 21 is likely to have a large size.

The inner members 1b, 2b, and 3b in the molds 1 to 3 may be made of a Ni-based alloy. Such an inner member made of a Ni-based alloy has low thermal conductivity, and therefore rapid heat transfer from glass to the metal mold, and temperature variations in the glass, wrinkles on the surface of the bottle, thickness failures and the like caused by such rapid heat transfer are prevented, while high cooling effect by ventilation as described above is provided. In this way, the temperature control of the contour surfaces 1a, 2a, and 3a is satisfactorily carried out. The method takes advantage of the high abrasion resistance and good mold releasability of the material, no oil coating is necessary or the amount of oil coating is reduced, and therefore the problem of a foreign substance coming into the glass material is reduced by the amount of the oil coating or the amount of reduced oil coating. The expensive Ni-based alloy is used only as the material of the inner members 1b, 2b, and 3b, and therefore the cost is kept lower than the case of forming the entire molds using a Ni-based alloy.

In addition, the outer members 1c, 2c, and 3c may be made of any of cast iron, stainless steel, and a copper alloy. In this way, the inner members 1b, 2b, and 3b of the Ni-based alloy have low thermal conductivity, while the outer members 1c, 2c, and 3c have higher thermal conductivity, and high cooling effect are provided by the ventilation as described above with this heat radiation characteristic, so that the temperature control of the contour surfaces is carried out satisfactorily.

The Ni-based alloy preferably contains silicon, boron, or both of silicon and boron as an active ingredient. The presence of silicon or boron at the surface of the outer members 1c, 2c, and 3c allows low thermal conductivity and good mold releasability to be obtained, so that the surface of the bottle is prevented from having wrinkles. The content of the silicon or boron is preferably about in the range of from 1.0% to 8.0% by weight, and it is more preferable that both elements are contained.

The contour surfaces 1a, 2a, and 3a have their surfaces processed to have any one kind of rough surface among micro-crack, porous, and irregular surfaces, so that the mold releasability from glass is more improved. The metal mold does not suffer from a mold releasing failure or a molding failure even without oil coating. Since the inner members 1b, 2b, and 3b made of the Ni-based alloy have high abrasion resistance, the durability of the rough surface state improves, and the maintenance cycle for re-roughening the surface with sandpaper or the like is prolonged, which is preferable as a matter of practicality.

Regarding the surface roughness of the contour surfaces 1a, 2a, and 3a, the surface roughness Ra is preferably adjusted in the range of from 1.0µm to 8.0µm. When the surface roughness Ra is less than 1.0µm, the corresponding outer surface of the bottle is more likely to crinkle. When the surface roughness Ra is higher than 8.0µm, the transparency of the bottle is degraded. It is particularly preferable that the surface roughness Ra at the contour surface 1a of the blank mold 1 is in the range of from 1.25µm to 6.0µm. The surface roughness Ra is preferably not less than 1.5µm in consideration of how easily a gob is slid into the blank mold 1.

Note that the inner members 1b, 2b, and 3b may be made of any one of cast iron, stainless steel, and a copper alloy, and their surfaces may contain any one of chromium carbide and chromium nitride as a main component. In this way, the cost is lowered than the case of using a Ni-based alloy, while low thermal conductivity and good mold releasability are obtained by the use of the coating made of chromium carbide or chromium nitride and the surface of the bottle is prevented from having wrinkles. Such a coating may be formed by a thermal spraying method such as plasma spraying, flame spraying, and detonation flame spraying or plating such as electroless plating and electrolytic composite plating.

Furthermore, the inner and outer members 1b and 1c, 2b and 2c, and 3b and 3c are detachably arranged, and as illustrated by the blank mold 1 in Figs. 1 to 3 shown as a typical example, the outer member 1c is radially fastened with bolts 31 from its outer circumferential surface in the center of the circumferential direction. More specifically, the member is fastened with the bolts in two locations, upper and lower locations. In this way, the inner and outer members 1b and 1c are coupled or detached by simple handling in a small number of locations, which is convenient for maintenance or disposal. Maintenance to cope with the abrasion of the contour surface 1a is carried out by removing only the inner member 1b and handling it as a small size, light weight part. The remaining outer member 1c may be combined with another inner member 1b and continued to be used. A special cost is not necessary for disposal as opposed to the case of disposing an integral item by melting and separating it. In addition, mold clamping force from the outer member 1c to the inner member 1b acts in a dispersed manner to the right and left around the central part as the base point, and the inner members 1b may smoothly be closed. To this end, a small gap extending from the bolt fastening part to the right and left is preferably provided between the outer member 1c and the inner member 1b In this way, if the outer member 1c and the inner member 1b thermally deform, the outer member 1c is prevented from attaching to the inner member 1b so that they cannot be separated. As shown in Figs. 1 to 3, for the purpose of bolt fastening as described above, the outer member 1c is provided with through holes 32 through which the bolts 31 are inserted, and the inner member 1b is provided with screw holes 33.

Note that the temperature of the molds 1, 2, and 3 including the inner members 1b, 2b, and 3b, and the outer members 1c, 2c, and 3c is regulated based on the difference in thermal conductivity from the inner members 1b, 2b, and 3b to the outer members 1c, 2c, and 3c depending on combinations of materials selected for the inner members 1b, 2b, and 3b and the outer members 1c, 2c, and 3c. In one case of experiment, the inner member 1b of the mold 1 in Fig. 1 was made of a solid material of a Ni-based alloy, and the outer member 1c was made of a solid material of a copper alloy, while in the other case, both inner and outer members 1b and 1c were made of a Ni-based alloy. The temperatures of the base part A and the waist part B of the contour surface 1a shown in Fig. 1 were as shown in the following Table 1, and the temperature was about 65°C lower at the base part A and about 75°C lower at the waist part B when the copper alloy was combined for the outer side.

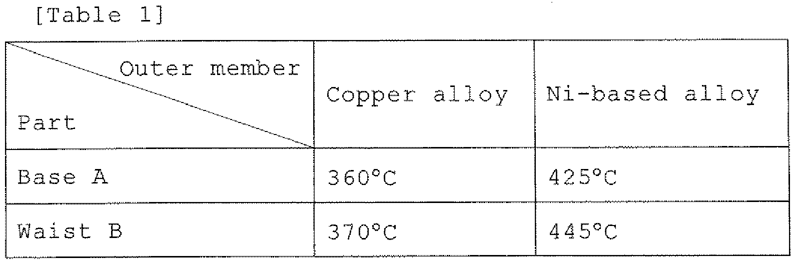

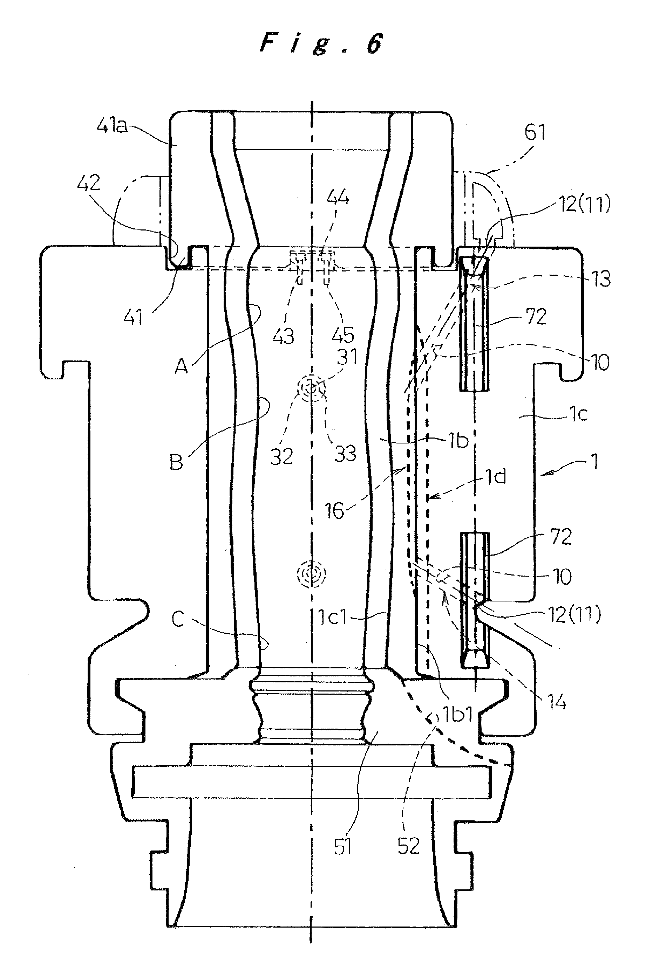

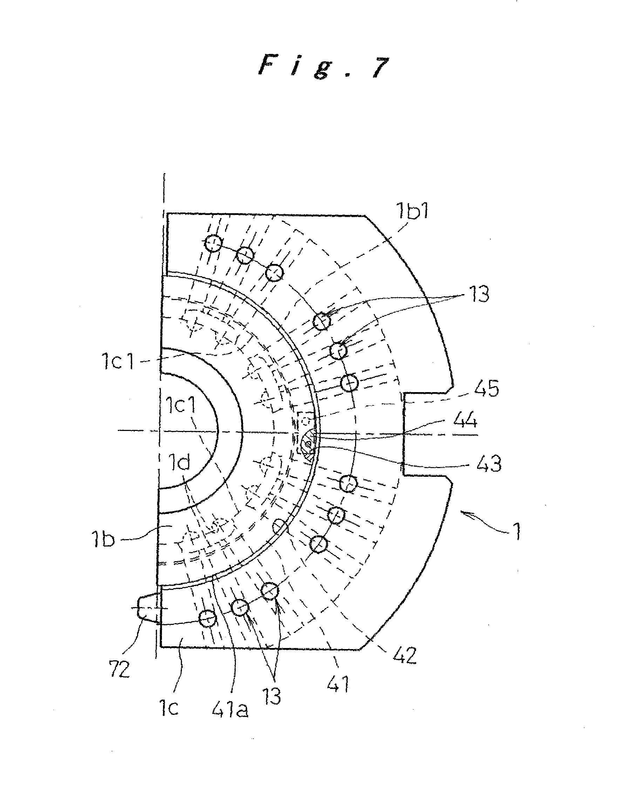

In another example of the mold 1 shown in Figs. 6 to 8 having substantially the same structure as that of the mold 1 shown in Fig. 1, fitting portions 41 and 42 as shown in Figs. 6 and 7 are provided to support the inner members 1b, 2b, and 3b as these inner members are fitted to the outer members 1c, 2c, and 3c from above in a detachable manner. In this way, as denoted by the imaginary line in Fig. 6 as a typical example, the top surface of the outer member 1c is covered with a plenum chamber 61 from the right and left that sends cooling air to the cooling path 16. The region of the inner member 1b is avoided as shown, so that the inner member 1b is pulled out above and detached from the outer member 1c for maintenance while the outer member 1c is covered with the plenum chamber 61, and the member may be re-mounted by the operation reversed in the order after the maintenance. The support of the inner member 1b on the outer member 1c is not only for its weight but also for support in the radial direction. More specifically, the member must be kept from sliding or dropping onto the side of the inside diameter. Therefore, as shown in Figs. 6 and 7, the fitting portion 41 is in the shape of a circular ridge wall suspended downward from the outer periphery of a flange shaped head part 41a formed as it is placed on the inner circumference of the upper end surface of the outer member 1c and at the outer circumference of the upper end surface of the inner member 1b. The fitting part 42 is in the form of a circular groove closer to the inner circumference of the upper end surface of the outer member 1c so that the fitting portion 41 is fitted from above. Furthermore, a pivot stopper fitting portion is provided between the fitting portions 41 and 42 to prevent the recess 43 and the groove 44 from pivoting from each other around the axial line. The head part 41a also serves as a grip for detaching/attaching.

The circular ridge wall and the circular groove forming the fitting portions 41 and 42 may be arranged reversely from the shown example to the inner and outer members 1b and 1c. For the blank mold, with large allowance for fitting provided for the fitting portions 41 and 42, molded parison is prevented from coming off when it is inverted to the blow side. The recessed portion 43 is on the side of the fitting portion 41 with the circular ridge wall, while the raised portion 44 is on the side of the circular groove fitting portion 42, but the arrangement may be reversed. The recessed portion 43 is readily formed by cutting a part of the circular ridge wall in its circumferential direction, while the raised portion 44 is readily provided in the circular groove by screwing and fixing a separate block with a screw 45. The portions may be formed in any other manners.

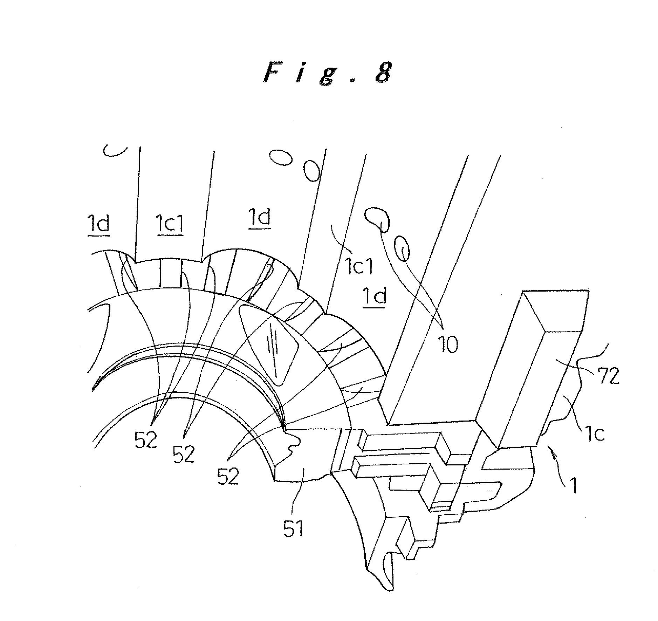

In this example, as shown in Figs. 6 and 8, a lip mold 51 is held between the inner and outer members 1b and 1c of the mold 1 to communicate with the contour surface 1a. A cooling path 52 in communication with the abutting path 1d is provided in the lip mold 51, so that ventilation is carried out from the abutting path 1d to the cooling path 52 of the lip mold 51. In this way, the temperature regulation and temperature control including that of the lip mold 51 are carried out using the cooling path 16 on the side of the mold 1.

Meanwhile, as shown in the example in Figs. 1 to 3, the inner member 1b may be supported as it is fastened to the outer member 1c by bolts, or alternatively the member is supported as it is suspended in the example in Figs. 6 and 8. In this way, the inner member 1b and the outer member 1c are combined for use in a detachable manner while they can be supported in the different ways. Because of the difference in the closeness in contact between the inner and outer members 1b and 1c between when the inner member 1b is supported as it is fixed to the outer member 1c by bolts 31 and when the inner member 1b is fitted to the outer member 1c from above, the thermal conductivity between the inner and outer members 1b and 1c varies. Based on the difference in thermal conductivity, the temperature of the mold 1 is regulated. To this end, as shown in Fig. 6, the inner and outer members 1b and 1c preferably have fitting portions 41 and 42 that allow the inner member 1b to be fitted to the outer member 1c from above and through holes 32 and screw holes 33 through which the bolts 31 are radially inserted and screwed to the inner member 1b for fastening from the outer circumferential surface of the outer member 1c at its circumferential center. In this way, the manner of temperature regulation is selected based on whether or not to use the bolts for fixing. The other structure and functions are not particularly different from the example shown in Figs. 1 to 3, and therefore the same reference numerals are assigned to the same elements or parts and their description will not be repeated.

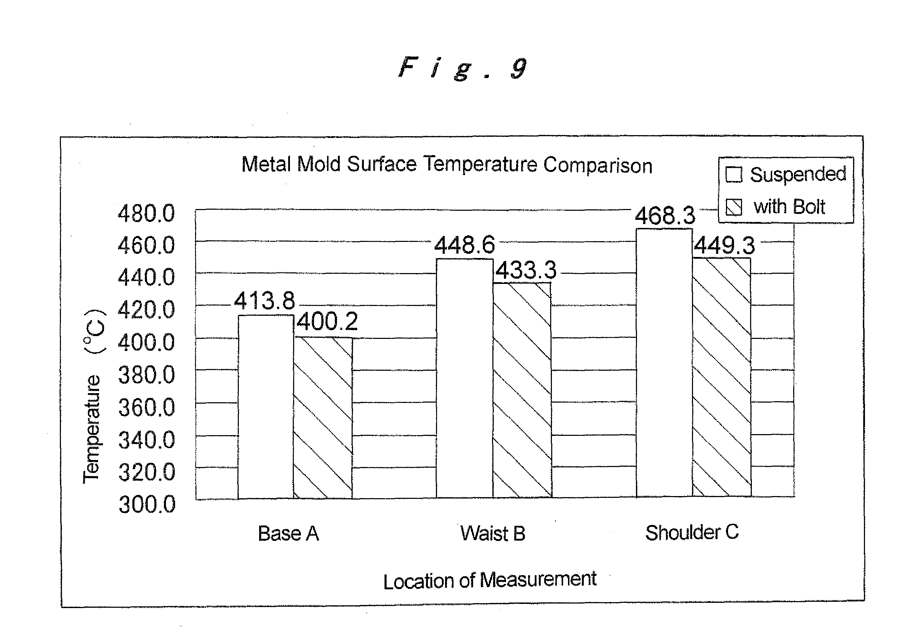

According to the result of experiments by the inventor, the temperatures of the base part A, the waist part B, and the shoulder part C of the contour surface 1a in Fig. 6 were approximately 13°C, approximately 15°C, and approximately 19°C lower respectively than those in the case in Fig. 9 in which the member was supported by suspension.

Now, several examples will be described.

### [Example 1]

In a blank mold for a metal mold for a glass bottle having a content of 360ml and a weight of 150g, the inner member was made of a Ni-based alloy, and the outer member was made of cast iron. The surface roughness Ra of the contour surface is controlled to be in the range of from 1.5µm to 5.0µm. The use of the metal mold allowed molding to be continued for 24 hours without using a swabbing oil. The result of experiment indicated that the mold could withstand continuous molding for about two days in maximum.

### [Example 2]

In the metal mold according to Example 1, a longitudinal groove as deep as 5mm was provided on the side of the inner member in the cooling path, and ventilation was carried out from the through path on the outer member side in communication with the groove. Then, the temperature of the mold for the contour surface was lowered by 20°C from the temperature of the metal mold solely made of a solid material of the Ni-based alloy. In this way, appropriate cooling was conducted in a location where it was not easy to lower the temperature of the contour surface and molding troubles were solved.

### [Example 3]

In a blank mold for a metal mold for a glass bottle having a content of 115ml and a weight of 205g, the inner member was made of cast iron, and a porous inner surface of a Cr₃C₂-Ni-Cr coating was formed by plasma spraying. In this example, Ni and Cr were used for treating an underlying surface for the inner member, and the Cr₃C₂ was layered thereon, so that a strong layered structure was formed. In addition, the surface roughness Ra of the contour surface of the inner member was controlled to be in the range of from 1.0µm to 1.5µm. The use of the metal mold allowed molding to be continued for five hours without using a mold releasing agent and there was neither a mold releasing failure nor a product defect.

### [Example 4]

In a blank mold for a metal mold for a glass bottle having a content of 360ml and a weight of 150g, the inner member was made of a Ni-based alloy, and the outer member was made of cast iron. The surface temperature of the mold attained the same level for about 1/2 the cooling time necessary for the metal mold solely made of a solid material of a Ni-based alloy.

### [Example 5]

In a blank mold for a mold according to Example 2, the inner member was made of a Ni-based alloy, and a groove as deep as 5mm for a cooling path was provided at the abutting surface on the outer side, and ventilation was carried out from a through path on the side of the outer member in communication with the groove. The mold temperature of the contour surface was lowered by almost 40°C from the case of the mold solely made of a solid material of the Ni-based alloy. In this way, appropriate cooling was conducted in a location where it was not easy to lower the temperature of the contour surface and molding troubles were solved. The outer member was made of cast iron.

### INDUSTRIAL APPLICABILITY

The invention is applicable to a blank mold or a blow mold for use in a bottle making machine such as an IS machine, allows the structure to be simplified, the cost to be lowered, and the molding precision and yield of the bottles to be improved, and the mold is convenient for maintenance and disposal.

## Claims

1. A method for regulating a temperature of a bottle mold, comprising allowing vertical ventilation to be carried out in a plurality of circumferential locations around a contour surface (1a, 2a, 3a) of a mold (1, 2, 3) in a process of molding, and
wherein the ventilation is carried out for cooling using an abutting path (1d, 2d, 3d) formed by abutting surfaces (1b1, 1c1) (2b1, 2c1) (3b1, 3c1) of inner and outer members (1b, 1c) (2b, 2c) (3b, 3c) forming a contour surface part and an outer peripheral part of the mold (1, 2, 3), so that the temperature of the mold (1, 2, 3) is regulated.

2. A method for regulating a temperature of a bottle mold, comprising allowing vertical ventilation to be carried out in a plurality of circumferential locations around a contour surface (1a, 2a, 3a) of a mold (1, 2, 3) in a process of molding, and
wherein the ventilation is carried out for cooling using a connection between an abutting path (1d, 2d, 3d) formed by abutting surfaces (1b1, 1c1) (2b1, 2c1) (3b1, 3c1) of inner and outer members (1b, 1c) (2b, 2c) (3b, 3c) forming a contour surface part and an outer peripheral part of the mold (1, 2, 3) and a through path (13, 14, 15) having one or more straight path section (10) formed in the inner member (1b, 2b, 3b) or/and the outer member (1c, 2c, 3c), so that the temperature of the mold (1, 2, 3) is regulated.

3. A method for regulating a temperature of a bottle mold, comprising allowing vertical ventilation to be carried out in a plurality of circumferential locations around a contour surface (1a, 2a, 3a) of a mold (1, 2, 3) in a process of molding, and
wherein the ventilation is carried out for cooling in a path that substantially conforms to a non-straight shape in an axial direction of the contour surface (1a, 2a, 3a) using a connection between an abutting path (1d, 2d, 3d) formed by abutting surfaces (1b1, 1c1) (2b1, 2c1) (3b1, 3c1) of inner and outer members (1b, 1c) (2b, 2c) (3b, 3c) forming the contour surface part and an outer peripheral part of the mold (1, 2, 3) and a through path (13, 14, 15) having two or more straight path sections (10) formed in the inner member (1b, 2b, 3b) or/and the outer member (1c, 2c, 3c), so that the temperature of the mold (1, 2, 3) is regulated.

4. The method for regulating a temperature of a bottle mold according to any one of claims 1 to 3, wherein the abutting path (1d, 2d, 3d) bent in the axial direction is used.

5. The method for regulating a temperature of a bottle mold according to any one of claims 1 to 3, wherein thermal insulation is enabled by a hollow part (21) formed between the abutting surfaces (1b1, 1c1) (2b1, 2c1) (3b1, 3c1), and the temperature of the mold (1, 2, 3) is regulated in combination with the cooling.

6. The method for regulating a temperature of a bottle mold according to any one of claims 1 to 3, wherein the temperature of the mold (1, 2, 3) is regulated based on a difference in thermal conductivity from the inner member (1b, 2b, 3b) to the outer member (1c, 2c, 3c) depending on a combination of materials selected for the inner member (1b, 2b, 3b) and the outer member (1c, 2c, 3c).

7. The method for regulating a temperature of a bottle mold according to any one of claims 1 to 3, wherein the inner member (1b, 2b, 3b) and the outer member (1c, 2c, 3c) are detachably combined in use, the temperature of the mold (1, 2, 3) is regulated based on a difference in thermal conductivity from the inner member (1b, 2b, 3b) to the outer member (1c, 2c, 3c) between when the inner member (1b, 2b, 3b) is supported as the inner member (1b, 2b, 3b) is fixed to the outer member (1c, 2c, 3c) by a bolt (31) and when the inner member (1b, 2b, 3b) is supported as the inner member (1b, 2b, 3b) is fitted to the outer member (1c, 2c, 3c) from above.

8. The method for regulating a temperature of a bottle mold according to any one of claims 1 to 3, wherein ventilation is also carried out from the abutting path (1d, 2d, 3d) to a cooling path (52) for a lip mold (51) held between the inner and outer members (1b, 1c) (2b, 2c) (3b, 3c) of the mold (1, 2, 3) to be in communication with the contour surface (1a, 2a, 3a) of the mold (1, 2, 3), so that the temperature is regulated.

9. A bottle mold comprising inner and outer members (1b, 1c) (2b, 2c) (3b, 3c) formed by casting, for forming a contour surface part and an outer peripheral part of the mold (1, 2, 3),
and further comprising a cooling path (16, 17, 18) that includes an abutting path (1d, 2d, 3d) formed between abutting surfaces (1b1, 1c1)(2b1, 2c1)(3b1, 3c1) of the inner and outer members (1b, 1c)(2b, 2c) (3b, 3c) by casting,
wherein the cooling path (16, 17, 18) has a vent (11) and an exhaust outlet (12) at an outer peripheral surface of the mold (1, 2, 3).

10. A bottle mold comprising inner and outer members (1b, 1c) (2b, 2c) (3b, 3c) formed by casting and forming a contour surface part and an outer peripheral part of the mold (1, 2, 3),
and further comprising a cooling path (16, 17, 18) that includes an abutting path (1d, 2d, 3d) formed between abutting surfaces (1b1, 1c1) (2b1, 2c1) (3b1, 3c1) of the inner and outer members (1b, 1c) (2b, 2c) (3b, 3c) by casting, and a through path (13, 14, 15) one or more straight path section (10) formed in the inner member or/and the outer member in communication with the abutting path,
wherein the cooling path (16, 17, 18) has a vent (11) and an exhaust outlet (12) at an outer peripheral surface of the mold (1, 2, 3).

11. A bottle mold comprising inner and outer members (1b, 1c) (2b, 2c) (3b, 3c) formed by casting and forming a contour surface part and an outer peripheral part of the mold (1, 2, 3),
and further comprising a cooling path (16, 17, 18) that includes an abutting path (1d, 2d, 3d) formed between abutting surfaces (1b1, 1c1) (2b1, 2c1) (3b1, 3c1) of the inner and outer members (1b, 1c) (2b, 2c) (3b, 3c) formed by casting, and a through path (13, 14, 15) having two or more straight path sections (10) formed in the inner member (1b, 2b, 3b) or/and the outer member (1c, 2c, 3c) to be in communication with the abutting path, the cooling path (16, 17, 18) substantially conforming to a non-straight shape of the contour surface (1a, 2a, 3a) in the axial direction,
wherein the cooling path (16, 17, 18) has a vent (11) and an exhaust outlet (12) at an outer peripheral part of the mold (1, 2, 3).

12. A bottle mold comprising inner and outer members (1b 1c) (2b, 2c) (3b, 3c) formed by casting and forming a contour surface part and an outer peripheral part of the mold (1, 2, 3),
and further comprising a cooling path (16, 17, 18) that includes an abutting path (1d, 2d, 3d) formed between abutting surfaces (1b1, 1c1) (2b1, 2c1) (3b1, 3c1) of the inner member (1b, 2b, 3b) made of a Ni-based alloy and the outer member (1c, 2c, 3c) by casting, and a through path (13, 14, 15) formed in the inner member (1b, 2b, 3b) or/and the outer member (1c, 2c, 3c) in communication with the abutting path,
wherein the cooling path (16, 17, 18) has a vent (11) and an exhaust outlet (12) at an outer peripheral surface of the mold.

13. A bottle mold comprising inner and outer members formed by casting and forming a contour surface part and an outer peripheral part of the mold (1, 2, 3),
and further comprising a cooling path (16, 17, 18) that includes an abutting path (1d, 2d, 3d) formed by casting between abutting surfaces (1b1, 1c1) (2b1, 2c1) (3b1, 3c1) of the inner member (1b, 2b, 3b) made of a Ni-based alloy and the outer member (1c, 2c, 3c) made of any one of cast iron, stainless steel, and a copper alloy, and a through path (13, 14, 15) formed in the inner member (1b, 2b, 3b) or/and the outer member (1c, 2c, 3c) in communication with the abutting path,
wherein the cooling path (16, 17, 18) has a vent (11) and an exhaust outlet (12) at an outer peripheral surface of the mold (1, 2, 3).

14. The bottle mold according to claim 12 or 13, wherein the Ni-based alloy contains silicon, boron, or both of silicon and boron as an active ingredient.

15. The bottle mold according to any one of claims 9 to 13, wherein the contour surface (1a, 2a, 3a) has a surface thereof made into a rough surface having any one of a micro crack form, a porous form, and an irregular form.

16. The bottle mold according to any one of claims 9 to 13, wherein the contour surface (1a, 2a, 3a) has a surface thereof roughened, and a surface roughness Ra thereof is in a range of from 1.0µm to 8.0µm.

17. The bottle mold according to any one of claims 9 to 11, wherein the inner member (1b, 2b, 3b) is made of any one of cast iron, stainless steel, and a copper alloy, and a surface thereof contains any one of chromium carbide and chromium nitride as a main component.

18. The bottle mold according to any one of claims 9 to 13, wherein a hollow part (21) is formed between the abutting surfaces (1b1, 1c1) (2b1, 2c1) (3b1, 3c1) by casting.

19. The bottle mold according to any one of claims 9 to 13, wherein the inner and outer members (1b, 1c) (2b, 2c) (3b, 3c) are detachably combined, so that the outer member (1c, 2c, 3c) is radially fixed with a bolt (31) from the outer circumferential surface of the outer member at the circumferential center thereof.

20. The bottle mold according to any one of claims 9 to 13, wherein the inner member (1b, 2b, 3b) is supported so that the inner member is detached/attached from/to the outer member (1c, 2c, 3c) from above.

21. The bottle mold according to any one of claims 9 to 13, wherein the inner and outer members (1b 1c) (2b, 2c) (3b, 3c) have fitting portions (41, 42) that fit the inner member (1b, 2b, 3b) to the outer member (1c, 2c, 3c) from above for support, and a through hole (32) and a screw hole (33) through which a bolt (31) is radially fastened to the inner member (1b, 2b, 3b) from the outer circumferential surface of the outer member (1c, 2c, 3c) at the circumferential center thereof.

22. The bottle mold according to any one of claims 9 to 13, further comprising a lip mold (51) held between the inner and outer members (1b, 1c) (2b, 2c) (3b, 3c) of the mold (1, 2, 3) and provided in communication with the contour surface (1a, 2a, 3a) of the mold (1, 2, 3), the lip mold (51) having a cooling path (52) in communication with the abutting path (1d 2d, 3d).
